# EUROPÄISCHE PATENTSCHRIFT

(11) **EP 1 794 011 B1**
(45) Veröffentlichungstag und Bekanntmachung des Hinweises auf die Patenterteilung: **08.04.2009**
(21) Anmeldenummer: 05772860.2
(22) Anmeldetag: 14.07.2005
(51) Int. Cl.: B60H 1/34

(54) **VORRICHTUNG FÜR EIN KRAFTFAHRZEUG, AUSSTRÖMER, STEUERUNGSGERÄT UND INSTRUMENTENTAFEL**
DEVICE FOR A MOTOR VEHICLE, OUTFLOW VENT, CONTROL DEVICE AND INSTRUMENT PANEL
DISPOSITIF POUR VEHICULE AUTOMOBILE, STRUCTURE D'ECOULEMENT, APPAREIL DE COMMANDE, ET TABLEAU DE BORD

(30) Priorität: 22.09.2004 DE 102004046273
(43) Veröffentlichungstag der Anmeldung: 13.06.2007
(73) Patentinhaber: Faurecia Innenraum Systeme GmbH, 76767 Hagenbach (DE)
(72) Erfinder: MORPAIN, Matthieu, F-25115 Pouilley-les-Vignes (FR); KOBER, Steve, 08233 Treuen (DE); BRAUN, Marco, 76848 Lug (DE); KOGLER, Mike, 76185 Karlsruhe (DE)
(74) Vertreter: Richardt, Markus Albert
(86) Internationale Anmeldenummer: PCT/EP2005/007654
(87) Internationale Veröffentlichungsnummer: WO 2006/032314

(56) Entgegenhaltungen:
- EP-A- 1 195 276
- DE-A1- 10 219 053
- DE-B3- 10 333 700
- FR-A- 2 711 949

## Beschreibung

Die Erfindung betrifft eine Vorrichtung für ein Kraftfahrzeug, einen Ausströmer, ein Steuerungsgerät sowie eine Instrumententafel mit einem Ausströmer.

Ausströmer sind für den Einsatz in Fahrzeugen verschiedenster Art bekannt. Sie ermöglichen einen Eintritt von Frisch-, Heiz- und/oder Kühlluft in einen Fahrzeuginnenraum. Üblicherweise haben vorbekannte Ausströmer ein um eine oder mehrere Achsen verdrehbares Luftaustrittselement mit Durchlässen. Durch die Ausrichtung des Luftaustrittselements lässt sich die Richtung der Luftströmung wählen.

Aus der DE 197 21 831 A1 ist ein Luftausströmer für den Innenraum eines Fahrzeugs bekannt, bei dem das Luftaustrittselement einen Teilbereich für einen diffusen Luftaustritt und einen Teilbereich für einen großflächigeren freien Luftaustritt aufweist, wobei die Art des Luftaustritts durch Verdrehen des Luftaustrittselements gewählt werden kann.

Aus der DE 43 38 099 C2 ist ferner eine Instrumententafel bekannt mit einer einem Luftkanal einseitig abdeckenden, großflächigen, perforierten Luftaustrittsfläche für diffuse Luftverteilung. Dabei bildet die großflächige, perforierte Luftaustrittsfläche, die der Frontscheibe zugekehrte Oberseite der Instrumententafel. Die Luftaustrittsfläche ist mit einem Luftverteilerkasten verbunden, an dem sich eine perforierte Luftklappe zur Steuerung des Luftstroms befindet. Weitere Luftzuführeinrichtungen für den Fahrzeuginnenraum, die eine diffuse Belüftung ermöglichen, sind unter anderem bekannt aus DE 39 08 541 C2, DE 15 30 615 und DE 19 09 519.

Vorbekannte Luftausströmer werden im Allgemeinen manuell eingestellt. Es gibt jedoch auch Ausströmer im Bereich der Oberklasse, die mittels eines Stellantriebs betätigt werden. Beispielsweise sind aus der DE-OS 37 17 676 und der DE 40 23 124 Belüftungsdüsen zur Einleitung von Warmluft und/oder Frischluft aus einer Ausblasöffnung bekannt, die ein Luftlenkteil aus Bimetallmaterial oder Memory-Metall aufweisen.

Ein Nachteil vorbekannter Luftausströmer zur Erzeugung eines diffusen Strömungsfelds ist jedoch, dass unterschiedliche Temperaturzonen im Fahrzeuginnenraum entstehen können. Insbesondere wird der Komfort dadurch beeinträchtigt, dass kalte Luft in dem Fahrzeuginnenraum nach unten absinkt, während warme Luft nach oben steigt. Dies führt zu Fußkälte bzw. mangelnder Klimatisierung im Kopfbereich.

Ein weiterer gemeinsamer Nachteil vorbekannter Klimaanlagen ist, dass zusätzlich ein Defroster erforderlich ist. Üblicherweise ist hierzu eine so genannte Defrosterleiste oder ein Defrostergitter nahe der Windschutzscheibenwurzel angeordnet. Der Defroster wird über einen zusätzlichen Luftkanal gespeist. Dementsprechend wird ein großer Bauraum zur Unterbringung des Defroster-Luftkanals und der Luftkanäle für die Klimaanlage benötigt. Verschiedene Defrostervorrichtungen sind u. a. bekannt aus US 4,549,471; US 4,583,448; US 4,604,946; US 4,646, 879 und US 6,049,939.

Aus der DE 10114605 A1 ist eine Strömungsauslassvorrichtung, insbesondere für ein Fahrzeuginnenraum-Belüftungssystem bekannt. In einem Strömungskanal ist vor der Auslassöffnung ein ansteuerbares Düsenelement vorgesehen, dass einen variabel einstellbaren effektiven Ausströmquerschnitt für den in die Auslassöffnung mündenden Strömungskanal definiert. Dadurch kann wahlweise ein Defrost-Luftstrom und ein Diffuser-Belüftungs-Luftstrom erzeugt werden.

Aus der DE 29716410 U1 ist eine Heizungs- oder Klimaanlage eines Kraftfahrzeuges bekannt. Diese weißt ein Luftleitelement auf, das über eine ein Bimetall umfassende Stelleinrichtung selbsttätig in Abhängigkeit der Lufttemperatur verstellbar ist.

Die gattungsgemäße EP 1 195 276 A2 offenbart als nächster Stand der Technik eine Vorrichtung für ein Kraftfahrzeug, wobei eine Vielzahl von Lüftungsklappen dazu verwendet wird, um einen Luftstrom zu regulieren, wobei die Vorrichtung drehbar gelagerte Luftführungsklappen auweist, wobei eine Drehung der Luftführungsklappen unter Verwendung eines Formgedächtnisdrahts realisiert ist.

Die DE 102 19 053 A1 offenbart eine Belüftungseinrichtung, insbesondere für Kraftfahrzeuginnenräume, mit einem Luftzuführkanal sowie einem Ausströmbereich zur Belüftung des Innenraums.

Die FR-A-2 711 949 eine Vorrichtung zur Regulierung eines Luftflusses in einem Kraftfahrzeug.

Die DE 103 33 700 B3 offenbart einen Ausströmer für ein Fahrzeug mit einem Stellelement für eine Luftströmung, einen Schwenkantrieb für das Stellelement, wobei der Schwenkantrieb ein Antriebselement mit einem temperaturinduzierbaren Formänderungseffekt aufweist.

Der Erfindung liegt demgegenüber die Aufgabe zu Grunde, eine verbesserte Vorrichtung für ein Kraftfahrzeug, einen Ausströmer, ein Steuerungsgerät und eine Instrumententafel zu schaffen.

Die der Erfindung zugrunde liegende Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird mit einem Antrieb, der ein erstes und ein zweites Formgedächtniselement aufweist, eine Vorrichtung geschaffen, die zumindest eine Ausströmer-Klappe aufweist. Der Öffnungswinkel der Ausströmer-Klappe wird durch Steuerungsmittel in Abhängigkeit eines Klimatisierungs-Betriebsmodus und eines Defroster-Betriebsmodus eingestellt. In dem Defroster-Betriebsmodus wird der Öffnungswinkel so gewählt, dass eine Windschutzscheibe des Kraftfahrzeugs angeströmt wird.

Die Erfindung ermöglicht also die Nutzung desselben Ausströmens zum Ausströmen von Luft sowohl in einem Defroster-Betriebsmodus als auch in einem Klimatisierungs-Betriebsmodus. Dadurch lässt sich der Bauraum einer Klimaanlage reduzieren. Insbesondere ermöglicht es die Erfindung, dass derselbe Luftkanal sowohl für die Ausströmung von Luft in dem Defroster-Betriebsmodus als auch in dem Klimatisierungs-Betriebsmodus verwendet werden kann. Dies hat den Vorteil, dass die Anzahl der Luftkanäle reduziert werden kann. Dies hat Gewichts- und Kostenvorteile und ermöglicht ferner die Aufnahme weiterer funktioneller Komponenten in die Instrumententafel des Kraftfahrzeugs, da der hierfür erforderliche Bauraum durch die Reduktion des für die Klimaanlage erforderlichen Bauraums geschaffen werden kann.

Nach einer Ausführungsform der Erfindung ist die zumindest eine Ausströmer-Klappe auf der der Windschutzscheibe zugewandten Seite einer Instrumententafel angeordnet. Beispielsweise ist zumindest eine Ausströmer-Klappe nahe einer Windschutzscheibenwurzel angeordnet. Vorzugsweise ist die zumindest eine Ausströmer-Klappe in dem Bereich der Instrumententafel angeordnet, in dem sich im Stand der Technik üblicherweise die Defrosterleiste befindet.

Nach einer Ausführungsform der Erfindung sind auf der Fahrerseite und der Beifahrerseite zumindest je ein Klappenpaar von Ausströmer-Klappen angeordnet.

Nach einer weiteren Ausführungsform der Erfindung sind von der Windschutzscheibenwurzel aus betrachtet hinter einer vorderen Ausströmer-Klappe oder einem vorderen Ausströmer-Klappenpaar ein oder mehrere weitere Ausströmer-Klappen angeordnet. Diese weiteren Ausströmer-Klappen befinden sich in einem größeren Abstand von der Windschutzscheibenwurzel und werden nur in dem Klimatisierungs-Betriebsmodus geöffnet.

Nach einer weiteren Ausführungsform der Erfindung werden die Ausströmer-Klappen in dem Klimatisierungs-Betriebsmodus um einen ersten Öffnungswinkel geöffnet. Vorzugsweise wird der erste Öffnungswinkel so gewählt, dass ein semidiffuser Luftstrom den Kopfraum des Fahrzeuginnenraums erreichen kann. Durch die entsprechend schwache Anströmung des Fahrer- und/oder Beifahrerkopfraums wird der entsprechende Luftstrom kaum wahrgenommen und führt andererseits doch zu der gewünschten näherungsweise homogenen Klimatisierung des Fahrzeuginnenraums.

In dem Defroster-Betriebsmodus werden nur die nahe der Windschutzscheibenwurzel gelegenen Ausströmer-Klappen um einen zweiten Öffnungswinkel geöffnet, während die dahinter gelegenen weiteren Ausströmer-Klappen geschlossen bleiben. Der zweite Öffnungswinkel wird dabei so gewählt, dass die Windschutzscheibe angeströmt wird. Vorzugsweise ist der Volumenstrom nicht von dem Öffnungswinkel der Klappen bzw. auch nicht von der Anzahl der geöffneten Klappen abhängig. Beispielsweise ändert sich durch unterschiedliche Öffnungswinkel bzw. durch die Änderung der Anzahl der geöffneten Klappen lediglich die Austrittsfläche, so dass sich die Geschwindigkeit der austretenden Luft verändert. Beispielsweise sind die ersten und zweiten Öffnungswinkel so gewählt, dass der Luftvolumenstrom im Klimatisierungs-Betriebsmodus und im Defroster-Betriebsmodus ungefähr gleich ist. Der Luftvolumenstrom muss jedoch für beide Betriebsarten nicht zwingend gleich sein, sondern kann sich aus der thermischen Fahrzeugbilanz bzw. aus dem Defrost-Verhalten ergeben. Der Unterschied zu dem Volumenstrom zwischen beiden Betriebsarten wird dabei vorzugsweise nur von der Klimaanlage gesteuert.

Im Allgemeinen wird jedoch für den Defroster-Betriebsmodus eine höhere Strömungsgeschwindigkeit notwendig sein als für den Klimatisierungs-Betriebsmodus. Diese höhere Strömungsgeschwindigkeit für den Defroster-Betriebsmodus kann dadurch erreicht werden, indem die zum Fahrzeuginnenraum zugewandten Klappenpaare geschlossen bleiben. Dadurch halbiert sich gegenüber dem Klimatisierungs-Betriebsmodus die Austrittsfläche und die austretende Luft erhält somit eine höhere Ausströmgeschwindigkeit. Für den Fall einer indirekten Belüftung in dem Klimatisierungs-Betriebsmodus wird die Geschwindigkeit der austretenden Luft vorzugsweise so weit reduziert, dass zwar eine gerichtete Ausströmung in den Fahrzeuginnenraum noch möglich ist, jedoch diese im Bereich der vorderen Passagiere nur noch unwesentlich wahrnehmbar ist. Dies wird zum Beispiel durch eine Vergrößerung der Austrittsfläche, das heißt durch Öffnen der zum Fahrzeuginnenraum zugewandten Klappenpaare erreicht. Ein besonderer Vorteil ist dabei, dass die zur Verfügung stehende Lüfterleistung in beiden Betriebsmodi optimal ausgenutzt werden kann.

Erfindungsgemäß werden die Ausströmer-Klappen durch eine oder mehrere Formgedächtniselemente angetrieben, um einen gewünschten Öffnungswinkel einzustellen.

Nach einer bevorzugten Ausführungsform der Erfindung wird der Formgedächtniseffekt durch Einsatz von Materialien mit Formgedächtniseffekt erreicht. Entsprechende Legierungen werden auch als Shape-Memory-Alloys (SMA) bezeichnet. Beispiele hierfür sind die Legierungen NiPi, und NiTi. Weitere Formgedächtnislegierungen sind aus "Legierungen mit Formgedächtnis", Dieter Stöckel, Erhard Hornbogen, Expert-Verlag, 1988, ISBN 3-8169-0323-1 bekannt. Alternativ oder zusätzlich können auch leitfähige Kunststoffe, wie sie aus dem Gebiet der Polyelectronics bekannt sind, eingesetzt werden. Aus solchen Formgedächtnislegierungen können Torsionsstäbe oder Drähte gefertigt werden.

Bei dem Formgedächtniseffekt handelt es sich um einen reversiblen Effekt. Hierzu kann ein Einwege-Effekt mit einer zusätzlichen mechanischen Rückstelleinrichtung verwendet werden. Dieser reversible Effekt beruht darauf, dass so genannte Memory-Legierungen im martensitischen Zustand eine wesentlich geringere Festigkeit aufweisen als in der Hochtemperatur-Phase. Durch Erwärmen wird also die Formänderung des Antriebselements in die Hochtemperaturform, z. B. durch Einschalten eines elektrischen Stromes bewirkt. Nach Abschalten des Stroms nimmt das Antriebselement nicht automatisch seine Ausgangsform wieder ein, sondern es wird durch eine durch geeignete mechanische Mittel aufgebrachte Kraft wieder in die Ausgangsform zurückgebracht.

Alternativ wird ein Material eingesetzt, das einen Zweiwege-Effekt aufweist. Beim Zweiwege-Effekt "erinnert" sich das Material sowohl an die Hochtemperatur- als auch an eine Niedrigtemperaturform. Als Spezialfall des Zweiwege-Effekts können auch Materialien, die einen All-Round-Effekt aufweisen, eingesetzt werden.

Der Einsatz von Materialien mit Formgedächtniseffekt für die Automobiltechnik ist an sich bekannt aus "Legierungen mit Formgedächtnis", Kapitel 3.8.2, Seite 92 bis 94, und zwar für Nebelscheinwerfer mit Steinschlag-Schutzlamellen mit einer Nickel-Titan-Zugfeder als Memory-Element sowie für temperaturabhängige Stellfunktionen im Motor-, Getriebe- und Fahrgestellbereich, wie z. B. für Lüfterkupplungen von Motoren, Drosselvorrichtungen von Einspritzpumpen sowie für Kraftfahrzeuggetriebe mit verbessertem Schaltverhalten. Aus der CA 2346260A1 ist ferner auch der Einsatz von Formgedächtnislegierungen zur Einstellung eines Rückspiegels an sich bekannt.

Erfindungsgemäß erfolgt die Einstellung der Ausströmer-Klappen durch eine Längenänderung des zumindest einen Formgedächtniselements. Es ist ein erstes Formgedächtniselement zur Einstellung des ersten Öffnungswinkels und ein zweites Formgedächtniselement zur Einstellung des zweiten Öffnungswinkels vorgesehen. Zur Einstellung des ersten Öffnungswinkels wird der Formgedächtniseffekt des ersten Formgedächtniselements ausgelöst; zur Einstellung des zweiten Öffnungswinkels wird alternativ oder zusätzlich der Formgedächtniseffekt des zweiten Formgedächtniselements ausgelöst.

Dabei kann die Auslösung des Formgedächtniseffekts auf unterschiedliche Art und Weise erfolgen, beispielsweise durch Beaufschlagung des Formgedächtniselements mit einem elektrischen Strom und die aufgrund des Stromfluss stattfindende Erwärmung, durch eine Strahlung, Ultraschall oder einen anderen Energieeintrag.

Nach einer weiteren Ausführungsform der Erfindung werden die ersten und zweiten Formgedächtniselemente durch entsprechende getrennt voneinander schaltbare erste und zweite elektrische Stromkreise gesteuert.

Nach einer weiteren bevorzugten Ausführungsform der Erfindung dient eine mit der Verstellmechanik der Ausströmer-Klappen verbundene Rückstellfeder zur Rückstellung der Ausströmer-Klappen in eine Schließposition.

Nach einer weiteren Ausführungsform der Erfindung werden die Formgedächtniselemente durch Pulsweitenmodulation angesteuert, um die Ausströmer-Klappe oder die Ausströmer- Klappen des Ausströmerfeldes offen zu halten. Der Strom wird periodisch zugestaltet. Dadurch wird ein Abkühlen der Formgedächtniselemente verhindert. Die Ausströmer-Klappen bleiben also geöffnet.

In einem weiteren Aspekt betrifft die Erfindung einen Ausströmer, mit zumindest einer steuerbaren Ausströmer-Klappe mit einem Formgedächtniselement, dessen Längenänderung bei Auslösung des Formgedächtniseffekts · zum Antrieb der Ausströmer-Klappe dient. Vorzugsweise handelt es sich bei dem Formgedächtniselement um einen Formgedächtnisdraht.

Nach einer weiteren Ausführungsform der Erfindung ist ein Ende des Formgedächtniselements mit der Verstellmechanik der Ausströmer-Klappen verbunden, während ein anderes Ende des Formgedächtniselements mit einem Ende einer Wippe verbunden ist. Das andere Ende der Wippe kann mit einem weiteren Formgedächtniselement verbunden sein. Durch Auslösung des Formgedächtniseffekts von nur einem der Formgedächtniselemente kommt es zur Einstellung des ersten Öffnungswinkels, während es durch Auslösung der Formgedächtniseffekte beider Formgedächtniselemente zur Einstellung des zweiten Öffnungswinkels kommt.

Nach einem weiteren Aspekt betrifft die Erfindung eine Instrumententafel mit einem erfindungsgemäßen Ausströmer.

Nach einem weiteren Aspekt betrifft die Erfindung ein Steuerungsgerät zur Beaufschlagung eines ersten Formgedächtniselements mit einem ersten Strom und zur Beaufschlagung eines zweiten Formgedächtniselements mit einem zweiten Strom, um entsprechende erste und zweite Öffnungswinkel einer Ausströmer-Klappe einzustellen.

Im Weiteren werden bevorzugte Ausführungsformen der Erfindung mit Bezugnahme auf die Zeichnungen näher erläutert. Es zeigen:
- Figur 1: eine schematische Schnittansicht eines unter einer Windschutzscheibe angeordneten Ausströmers und der dazugehörigen Steuerung im geschlossenen Zustand des Ausströmers,
- Figur 2: den Ausströmer der Figur 1 in einem Klimatisierungs-Betriebsmodus,
- Figur 3: den Ausströmer der Figuren 1 und 2 in einem Defroster-Betriebsmodus,
- Figur 4: eine perspektivische Darstellung einer weiteren Ausführungsform eines erfindungsgemäßen Ausströmers im geschlossenen Zustand,
- Figur 5: eine perspektivische Detailansicht des Ausströmers der Figur 4 aus Richtung der Windschutzscheibe,
- Figur 6: eine perspektivische Detailansicht des Ausströmers der Figur 4 in Richtung der Windschutzscheibe.

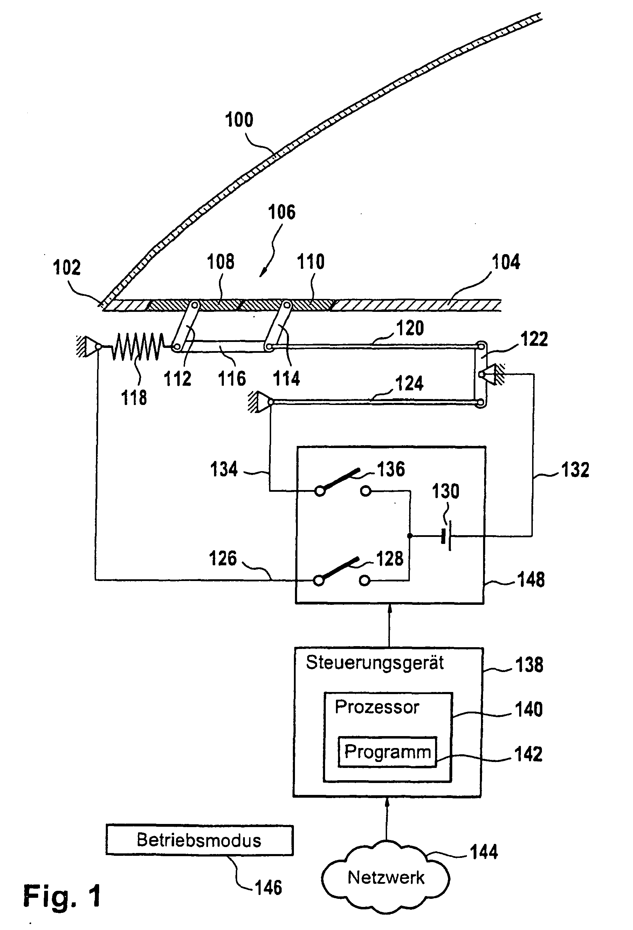

Die Figur 1 zeigt eine Windschutzscheibe 100 eines Fahrzeugs. Nahe einer Windschutzscheibenwurzel 102 ist auf der der Windschutzscheibe 100 zugewandten Oberseite einer Instrumententafel 104 ein Ausströmer 106 angeordnet. Der Ausströmer 106 hat eine Ausströmerklappe 108 und eine Ausströmer-Klappe 110. Die Ausströmer-Klappen 108 und 110 sind über die Hebel 112 bzw. 114 und die Koppelstange 116 mechanisch miteinander gekoppelt.

Durch die Hebel 112 und 114 sowie die Koppelstange 116 wird ein Verstellmechanismus für die Ausströmer-Klappen 108 und 110 geschaffen, der mit einer Rückstellfeder 118 verbunden ist. Auf seiner der Rückstellfeder 118 gegenüberliegenden Seite ist der Verstellmechanismus mit einem Ende eines Formgedächtnisdrahts 120 verbunden. Das andere Ende des Formgedächtnisdrahts 120 ist mit einer Seite einer mechanischen Wippe 122 verbunden. Mit der anderen Seite der Wippe 122 ist ein Ende eines weiteren Formgedächtnisdrahts 124 verbunden. Das andere Ende des Formgedächtnisdrahts 124 ist mit der Instrumententafel 104 fest verbunden.

Ein elektrischer Leiter 126 ist mit der Rückstellfeder 118 und mit einem elektrischen Schalter 128 verbunden. Der elektrische Schalter 128 ist mit einer Spannungsquelle 130 verbunden, die wiederum mit einem elektrischen Leiter 132 mit der Wippe 122 elektrisch verbunden ist.

Der Formgedächtnisdraht 124 kann über den elektrischen Leiter 134 und den Schalter 136 mit der Spannungsquelle 130 verbunden werden.

Bei Schließung des Schalters 128 und bei gleichzeitig geöffnetem Schalter 136 fließt ein elektrischer Strom durch den Formgedächtnisdraht 120, aber nicht durch den Formgedächtnisdraht 124. Der Stromkreis durch den Formgedächtnisdraht 120 wird über den elektrisch leitfähigen Verstellmechanismus, das heißt insbesondere die Koppelstange 116, die Rückstellfeder 118, den Leiter 126, den Schalter 128, die Spannungsquelle 130, die Spannungsquelle 132 und die elektrisch leitfähige Wippe 122 geschlossen. Aufgrund der durch den Stromfluss hervorgerufenen Erwärmung des Formgedächtnisdrahts 120 wird dessen Formgedächtniseffekt ausgelöst, sodass sich der Formgedächtnisdraht 120 zusammenzieht. Dadurch wird eine Kraft auf den Verstellmechanismus ausgeübt, sodass die Ausströmer-Klappen 108 und 110 um einen ersten Öffnungswinkel geöffnet werden.

Alternativ kann der erste Öffnungswinkel durch Schließen des Schalters 136 bei geöffnetem Schalter 128 eingestellt werden. In diesem Fall fließt ein elektrischer Strom nur durch den Formgedächtnisdraht 124, nicht aber durch den Formgedächtnisdraht 120. Der Stromkreis wird über den Leiter 134, den Schalter 136, die Spannungsquelle 130, den Leiter 132 und die elektrisch leitfähige Wippe 122 geschlossen. Aufgrund der durch den elektrischen Stromfluss erfolgenden Erwärmung des Formgedächtnisdrahts 124 wird dessen Formgedächtniseffekt ausgelöst, sodass sich der Formgedächtnisdraht 124 zusammenzieht. Aufgrund dessen wird über die Wippe 122 und den Formgedächtnisdraht 120 eine Antriebskraft auf den Verstellmechanismus übertragen, sodass sich die Ausströmer-Klappen 108 und 110 auf den gewünschten Öffnungswinkel einstellen.

Zur Einstellung eines größeren Öffnungswinkels werden beide Schalter 128 und 136 geschlossen. Aufgrund der mechanischen Kopplung der Formgedächtnisdrähte 120 und 124 über die Wippe 122 sind die Formänderungseffekte der beiden Formgedächtnisdrähte 120 und 124 kumulativ, sodass ein entsprechend großer Verstellweg auf die Verstellvorrichtung der Ausströmerklappen übertragen wird. Dadurch werden die Ausströmer-Klappen 108 und 110 auf einen entsprechend größeren Öffnungswinkel eingestellt.

Die Steuerung der Schalter 128 und 136 erfolgt durch ein Steuerungsgerät 138 der Klimaanlage. Das Steuerungsgerät 138 hat einen Prozessor 140 zur Ausführung eines Programms 142. Das Steuerungsgerät 138 kann über ein Netzwerk 144, beispielsweise einen so genannten CAN oder einen LIN-Bus mit weiteren elektronischen Komponenten verbunden sein.

Über das Netzwerk 144 kann das Steuerungsgerät 138 einen Steuerungsbefehl 146 erhalten. Der Steuerungsbefehl 146 gibt den gewünschten Betriebsmodus an, das heißt, ob ein Defroster-Betriebsmodus oder ein Klimatisierungs-Betriebsmodus gewünscht wird.
Der Steuerungsbefehl 146 wird von dem Programm 142 verarbeitet, welches entsprechend die Schalter 128 und/oder 136 ansteuert.

Vorzugsweise sind die Schalter 128, 136 sowie die Spannungsquelle 130 durch eine Pulsweitenmodulationsvorrichtung 148 realisiert. In diesem Fall übergibt das Programm 142 die für die Ströme durch das Formgedächtniselement 120 und/oder 124 gewünschten Tastverhältnisse an die Pulsweitenmodulationsvorrichtung 148.

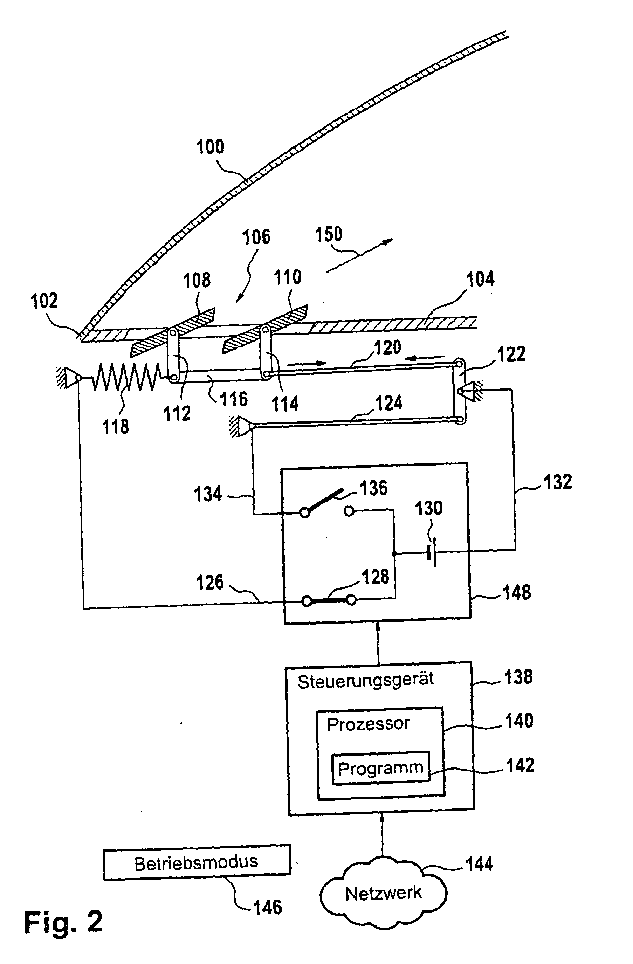

Die Figur 2 zeigt den Ausströmer 106, nachdem nur der Schalter 128 geschlossen worden ist. Aufgrund der Schließung des Schalters 128 fließt ein Strom durch das Formgedächtniselement 120, sodass sich dieses erwärmt und zusammenzieht. Die Länge des Formgedächtnisdrahts 124 bleibt dabei im Wesentlichen unverändert, da der Schalter 136 geöffnet bleibt. Auf den Verstellmechanismus, insbesondere die Koppelstange 116, wird dadurch eine Kraft entgegen der Rückstellkraft der Rückstellfeder 118 übertragen, sodass die Ausströmer-Klappen 108 und 110 um einen ersten Öffnungswinkel geöffnet werden. Der erste Öffnungswinkel beträgt zum Beispiel zwischen 35 und 65 Grad, vorzugsweise zwischen 30 und 40 Grad, insbesondere ca. 37,5 Grad.

Aufgrund der Öffnung der Ausströmerklappen 108 und 110 kann Luft aus einem unterhalb der Ausströmerklappen 108, 110 angeordneten Luftkanal (in der Figur der Übersichtlichkeit halber nicht gezeigt) in den Fahrgastraum des Kraftfahrzeugs hineinströmen. Dadurch wird ein semi-diffuses Lüftungsfeld erzeugt, welches in etwa in Richtung des Pfeils 150 ausgerichtet ist und den Kopfraum des Fahrgastraums des Kraftfahrzeugs erreicht. Durch die semidiffuse Belüftung ist ein hohes Maß an Komfort gegeben, da einerseits das semidiffuse Lüftungsfeld nicht oder kaum wahrgenommen wird und andererseits zu einer mehr oder weniger homogenen Klimatisierung des Fahrgastraums führt.

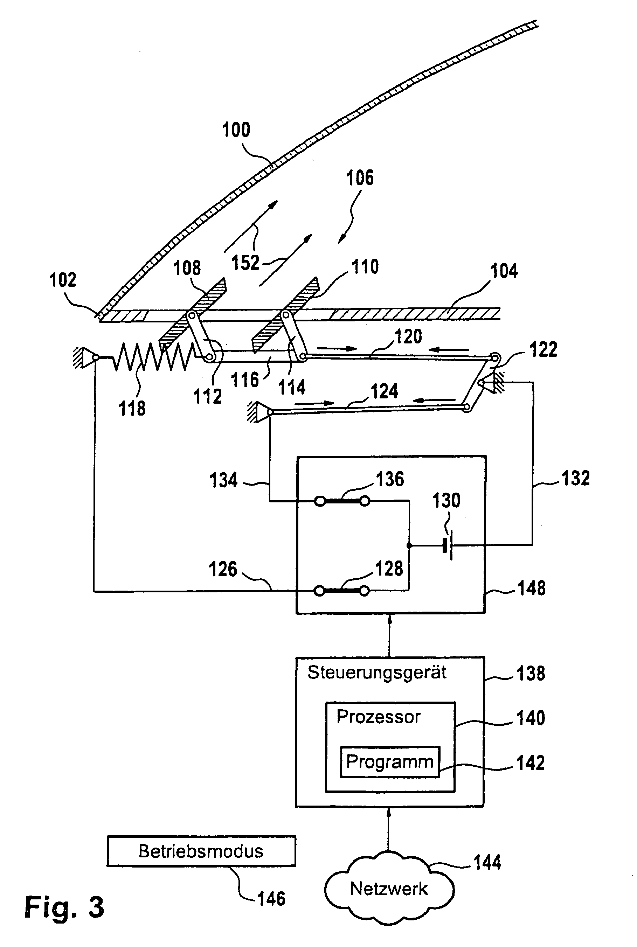

Die Figur 3 zeigt den Zustand des Ausströmers 106 in den Defroster-Betriebsmodus. In dem Defroster-Betriebsmodus werden beide Schalter 128 und 136 geschlossen. Dadurch werden die Formgedächtniseffekte beider Formgedächtnisdrähte 120 und 124 ausgelöst. Dementsprechend wird ein größerer Verstellweg auf den Verstellmechanismus übertragen, welches zu einem größeren Öffnungswinkel der Ausströmer-Klappen 108 und 110 führt. Dieser Öffnungswinkel beträgt zum Beispiel zwischen 65 und 110 Grad, vorzugsweise zwischen 75 und 95 Grad, insbesondere ca. 80 Grad.

Der von dem Lüfter erzeugte Luftstrom wird aufgrund der Einstellung der Ausströmer-Klappen 108 und 110 auf die Windschutzscheibe gerichtet, sodass der Luftstrom in etwa in Pfeilrichtung 152 auf die Windschutzscheibe auftrifft. Vorzugsweise wird der Öffnungswinkel der Ausströmer-Klappen 108, 110 in dem Defrost-Fall so gewählt, dass die Luft-Strömung entlang der Windschutzscheibe verläuft, wodurch ein mehr oder weniger gleichmäßiges Abtauen erreicht werden kann. Der Luftstrom sollte also in einem flachen Winkel auf die Windschutzscheibe auftreffen. Auch im Defrost-Betriebsmodus wirken also die Ausströmer-Klappen vorzugsweise nicht reflektierend, sondern sie geben die Strömungsrichtung der austretenden Luft vor. Für den idealen Defrost-Fall ist nämlich ein annähern senkrechtes Auftreten der Luft auf die Windschutzscheibe eher ungünstig, da die Strömungsgeschwindigkeit dadurch stark minimiert wird. In diesem Fall kommt es zu einer eher lokalen Erwärmung der Windschutzscheibe, wodurch diese anfänglich nur an diesem Punkt abtauen wird.

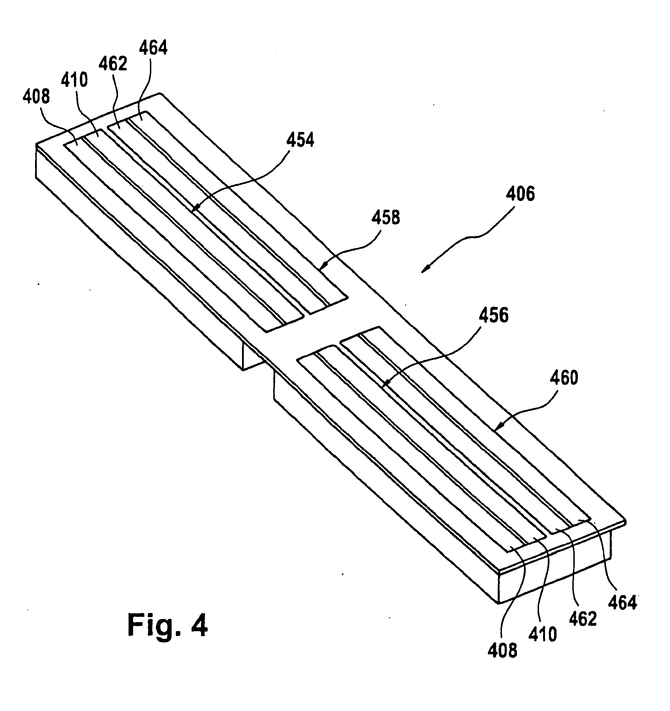

Die Figur 4 zeigt eine weitere Ausführungsform eines Ausströmers. Elemente der Figur 4, die Elementen 1, 2 und 3 entsprechen, sind dabei mit entsprechenden Bezugszeichen gekennzeichnet.

Der Ausströmer 406 hat zwei Klappen-Paare 454 und 456, die jeweils zwei Ausströmer-Klappen 408 und 410 aufweisen. Die Ausströmerklappen 408 und 410 der beiden Klappenpaare 454 und 456 sind über einen gemeinsamen Verstellmechanismus mechanisch miteinander gekoppelt. Die Klappenpaare 454 und 456 sind dazu ausgebildet, dass sie in dem Klimatisierungs-Betriebsmodus um einen ersten Öffnungswinkel geöffnet werden (vgl. Figur 2) und in einem Defroster-Betriebsmodus um einen zweiten, größeren Öffnungswinkel geöffnet werden (vgl. Figur 3).

Der Ausströmer 406 hat zwei weitere Klappenpaare 458 und 460. Die Klappenpaare 458 und 460 haben jeweils zwei Ausströmer-Klappen 462 und 464.

Die Ausströmerklappen 462 und 464 der beiden Klappenpaare 458 und 460 sind dazu ausgebildet, dass sie in dem Klimatisierungs-Betriebsmodus geöffnet werden, so wie dies bei den Ausströmerklappen 408 und 410 der Fall ist. Dagegen sind die Ausströmer-Klappen 462 und 464 dazu ausgebildet, dass sie in dem Defroster-Betriebsmodus geschlossen bleiben. Dies hat den Vorteil, dass in dem Defroster-Betriebsmodus die zur Verfügung stehende Lüfterleistung nur zum Anströmen der Windschutzscheibe über die am nächsten zu der Windschutzscheibe gelegenen Ausströmer-Klappen 408 und 410 genutzt wird, um möglichst schnell die Windschutzscheibe zu enteisen.

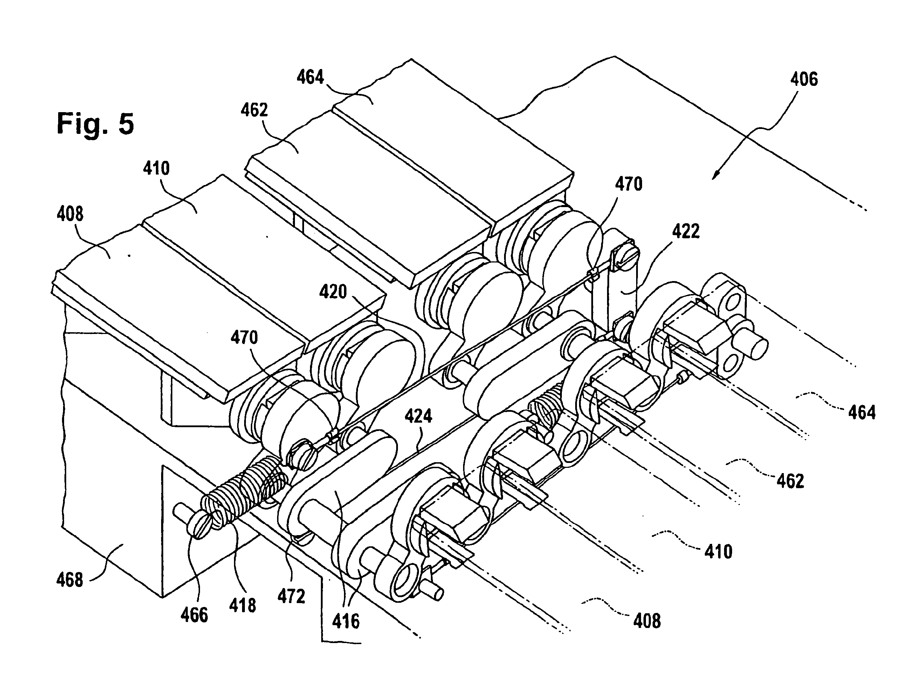

Die Figur 5 zeigt eine Detailansicht des Ausströmers 406 der Figur 4.

Wie in der Figur 5 dargestellt verfügen die Ausströmerklappen 408 und 410 der Klappenpaare 454 und 456 über einen gemeinsamen Verstellmechanismus, der insbesondere die Koppelstangen 416 aufweist. Auf den Verstellmechanismus übt eine Rückstellfeder 418 eine Rückstellkraft auf. Die Rückstellfeder 418 ist mit dem Verstellmechanismus und über eine Clipverbindung 466 mit einem Trägerteil 468 des Ausströmers 406 verbunden. Der Verstellmechanismus für die vorderen Ausströmer-Klappen 408 und 410 ist mit dem Formgedächtnisdraht 420 verbunden. Beispielsweise ist der Formgedächtnisdraht 420 an dem Verstellmechanismus mittels einer so genannten Krimpverbindung 470 befestigt.

An seinem anderen Ende ist der Formgedächtnisdraht 420 mit einer Wippe 422 verbunden, vorzugsweise über eine weitere Krimpverbindung 470.

An dem gegenüberliegenden Ende der Wippe 422 ist über eine Krimpverbindung 470 ein Formgedächtnisdraht 424 befestigt. Das andere Ende des Formgedächtnisdrahts 424 ist mit einer Clipverbindung 472 an dem Trägerteil 468 befestigt. Die elektrische Schaltung zur Ansteuerung der Formgedächtnisdrähte 420 und 424 entspricht der in der Figur 1 gezeigten Schaltung.

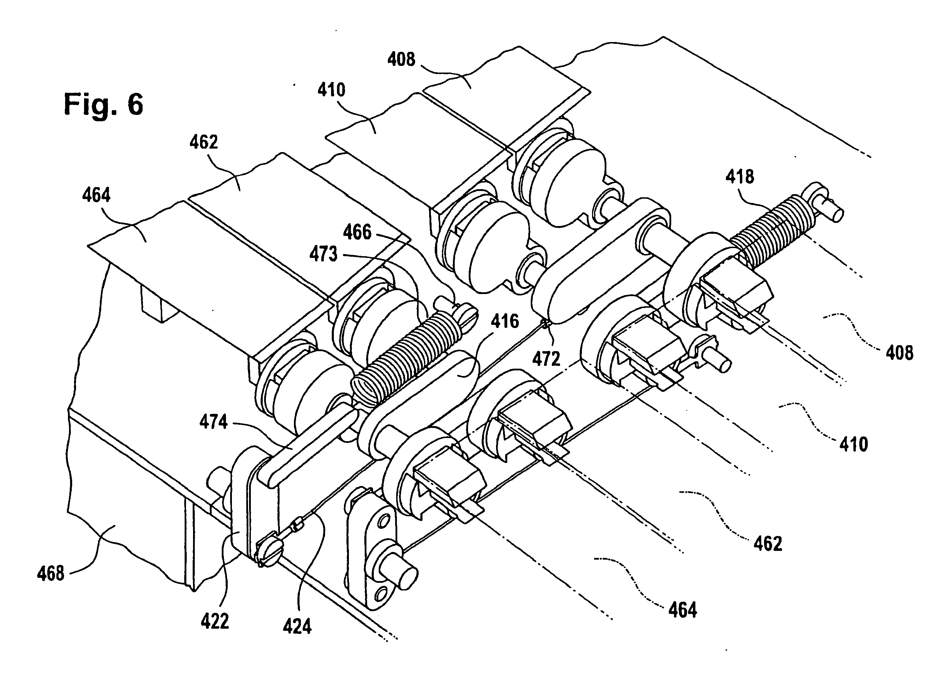

Die Figur 6 zeigt die Teilansicht der Figur 5 aus einer entgegengesetzten Richtung, das heißt, in Richtung der Windschutzscheibe. Die Ausströmerklappen 462 und 464 der hinteren Klappen-Paare 458 und 460 sind über einen gemeinsamen Verstellmechanismus mechanisch miteinander gekoppelt, ähnlich, wie dies auch bei den vorderen Klappenpaaren 454 und 456 der Fall ist. Insbesondere beinhaltet der Verstellmechanismus der hinteren Klappen-Paare 458 und 460 eine Koppelspange 416.

Eine weitere Rückstellfeder 473 ist mit dem Verstellmechanismus für die Ausströmer-Klappen 462 und 464 verbunden, um eine Rückstellkraft hierauf auszuüben. Die Rückstellfeder 473 ist mit dem Trägerteil 468 über eine Clipverbindung 466 verbunden.

Um den elektrischen Stromkreis über die Clipverbindungen 466 zu schließen, sind diese vorzugsweise elektrisch leitfähig. Alternativ oder zusätzlich können die entsprechenden Verbindungen durch eine Anschraubung hergestellt werden, die zugleich für eine elektrische Kontaktierung sorgt.

Anstelle eines Formgedächtnisdrahts 420 ist der Verstellmechanismus für die Ausströmer-Klappen 462 und 464 über eine Stange 474 mit der Wippe 422 verbunden. Vorzugsweise erfolgt der Stromlauf nicht über die Rückholfeder und die Koppelstange, sondern direkt über die Wippe auf den Formgedächtnisaktuator. Somit muss die Stange 474 nicht zwingend aus leitfähigem Material bestehen.

Dagegen ist das andere Ende der Wippe 422 mit einem Formgedächtnisdraht 424 verbunden, ähnlich wie dies auch bei der Wippe 422 für die vorderen Klappenpaare 454 und 456 der Fall ist. Das andere Ende des Formgedächtnisdrahts 424 ist mit einer Clipverbindung 472 mit dem Trägerteil 468 verbunden.

Zur Öffnung der hinteren Ausströmer-Klappen 462 und 464 wird ein Strom durch den Formgedächtnisdraht 424 eingeschaltet, sodass sich die Ausströmer-Klappen 462 und 464 um den ersten Öffnungswinkel für die Klimatisierung des Fahrgastraums öffnen. Eine weitergehende Öffnung ist nicht vorgesehen, da die Ausströmer-Klappen 462 und 464 ausschließlich in dem Klimatisierungs-Betriebsmodus, nicht aber in dem Defroster-Betriebsmodus geöffnet werden.

### Bezugszeichenliste

- 100: Windschutzscheibe
- 102: Windschutzscheibenwurzel
- 104: Instrumententafel
- 106: Ausströmer
- 108: Ausströmer-Klappe
- 110: Ausströmer-Klappe
- 112: Hebel
- 114: Hebel
- 116: Koppelstange
- 118: Rückstellfeder
- 120: Formgedächtnisdraht
- 122: Wippe
- 124: Formgedächtnisdraht
- 126: Leiter
- 128: Schalter
- 130: Spannungsquelle
- 132: Leiter
- 134: Leiter
- 136: Schalter
- 138: Steuerungsgerät
- 140: Prozessor
- 142: Programm
- 144: Netzwerk
- 146: Steuerungsbefehl
- 148: Pulsweitenmodulationsvorrichtung
- 150: Pfeil
- 152: Pfeil
- 406: Ausströmer
- 408: Ausströmer-Klappe
- 410: Ausströmer-Klappe
- 416: Koppelstange
- 418: Rückstellfeder
- 420: Formgedächtnisdraht
- 422: Wippe
- 424: Formgedächtnisdraht
- 454: Klappen-Paar
- 456: Klappen-Paar
- 458: Klappen-Paar
- 460: Klappen-Paar
- 462: Ausströmer-Klappe
- 464: Ausströmer-Klappe
- 466: Clipverbindung
- 468: Trägerteil
- 470: Krimpverbindung
- 472: Clipverbindung
- 473: Rückstellfeder
- 474: Stange

## Patentansprüche

1. Vorrichtung für ein Kraftfahrzeug mit
- zumindest einer Ausströmer-Klappe (108, 110; 408, 410),
- Steuerungsmitteln (112, 114, 116, 118, 120, 122, 124, 138, 148; 416, 418, 420, 422, 424) zur Einstellung eines Öffnungswinkels der Ausströmer-Klappe in Abhängigkeit eines Klimatisierungs- oder eines Defroster-Betriebsmodus, wobei die Steuerungsmittel zur Einstellung eines ersten Öffnungswinkels in dem Klimatisierungs-Betriebsmodus und zur Einstellung eines zweiten Öffnungswinkels in dem Defroster-Betriebsmodus zur Anströmung einer Windschutzscheibe (100) des Kraftfahrzeugs ausgebildet sind,
- mit einem Antrieb (112, 114, 116, 118, 122; 416, 422) für die zumindest eine Ausströmer-Klappe, der zumindest ein erstes Formgedächtniselement (120; 420) aufweist, wobei das erste Formgedächtniselement (120; 420) zur Ausübung einer Zug- oder Druckkraft auf einen Verstellmechanismus (112, 114, 116; 416) ausgebildet ist, um einen Öffnungswinkel der Ausströmer-Klappe einzustellen, wobei ein erstes Ende des ersten Formgedächtniselements mit dem Verstellmechanismus, der zumindest einen Ausströmer-Klappe und ein zweites Ende des ersten Formgedächtniselements mit einer ersten Seite einer Wippe (122; 422) verbunden ist,
- mit einem zweiten Formgedächtniselement (124; 424), das mit einer zweiten Seite der Wippe verbunden ist, wobei die zumindest eine Ausströmer-Klappe durch Auslösung des Formgedächtniseffekts des ersten Formgedächtniselements in einen ersten Öffnungswinkel gebracht wird und durch Auslösung des Formgedächtniseffekts des zweiten Formgedächtniselements in einen zweiten Öffnungswinkel gebracht wird,
wobei der erste Öffnungswinkel einen Klimatisierungs-Betriebsmodus und der zweite Öffnungswinkel einem Defroster-Betriebsmodus entspricht.

2. Vorrichtungen nach Anspruch 1, wobei die Ausströmer-Klappe auf einer der Windschutzscheibe zugewandten Seite einer Instrumententafel (104) des Kraftfahrzeugs angeordnet ist.

3. Vorrichtung nach Anspruch 1 oder 2, wobei die Ausströmer-Klappe nahe einer Windschutzscheibenwurzel (102) angeordnet ist.

4. Vorrichtung nach Anspruch 1, 2 oder 3, wobei auf der Fahrerseite und auf der Beifahrerseite je ein Klappenpaar (454, 456) von Ausströmer-Klappen angeordnet ist.

5. Vorrichtung nach einem der vorhergehenden Ansprüche, mit zumindest einer zweiten Ausströmer-Klappe (462, 464), die von einer Windschutzscheibenwurzel aus betrachtet hinter der Ausströmer-Klappe angeordnet ist, und wobei die Steuerungsmittel so ausgebildet sind, dass die zweite Ausströmer-Klappe nur in dem Klimatisierungs-Betriebsmodus geöffnet wird.

6. Vorrichtung nach Anspruch 5, wobei auf der Fahrerseite und auf der Beifahrerseite je ein zweites Klappenpaar (458, 460) von zweiten Ausströmer-Klappen angeordnet ist.

7. Vorrichtung nach einem der vorhergehenden Ansprüche, wobei mehrere der Ausströmer-Klappen einen gemeinsamen Luftkanal abschließen bzw. freigeben.

8. Vorrichtung nach einem der vorhergehenden Ansprüche 5, 6 oder 7, wobei die ersten und die zweiten Öffnungswinkel so gewählt sind, dass der Luftstrom, in dem die Defroster-Betriebsmodus in etwa gleich dem Luftstrom in dem Klimatisierungs-Betriebsmodus ist.

9. Vorrichtung nach einem der vorhergehenden Ansprüche, wobei der zweite Öffnungswinkel so gewählt ist, dass der Luftstrom in dem Klimatisierungs-Betriebsmodus einen Kopfbereich in dem Innenraum des Kraftfahrzeugs erreicht.

10. Vorrichtung nach einem der vorhergehenden Ansprüche, wobei der erste Öffnungswinkel zwischen 25 und 45 Grad beträgt, vorzugsweise zwischen 30 und 40 Grad, insbesondere ca. 37,5 Grad.

11. Vorrichtung nach einem der vorhergehenden Ansprüche, wobei der zweite Öffnungswinkel zwischen 60 und 110 Grad beträgt, vorzugsweise zwischen 70 und 95 Grad, insbesondere ca. 80 Grad.

12. Vorrichtung nach einem der vorhergehenden Ansprüche, wobei der zweite Öffnungswinkel in etwa das Doppelte des ersten Öffnungswinkels beträgt.

13. Vorrichtung nach einem der vorhergehenden Ansprüche, mit einem elektrischen Schaltkreis zur Steuerung des zumindest einen Formgedächtniselements.

14. Vorrichtung nach einem der vorhergehenden Ansprüche, mit zumindest einer zweiten Ausströmer-Klappe, die von der Windschutzscheibenwurzel aus betrachtet hinter der Ausströmerklappe angeordnet ist, und mit zweiten Antriebsmitteln für die zumindest zweite Ausströmer-Klappe, wobei die zweiten Antriebsmittel ein Formgedächtniselement zur Einstellung nur des ersten Öffnungswinkels aufweisen.

15. Vorrichtung nach einem der vorhergehenden Ansprüche, wobei die Steuerungsmittel Pulsweitenmodulationsmittel (148) zur Steuerung des zumindest einen Formgedächtniselements aufweisen.

16. Vorrichtung nach einem der vorhergehenden Ansprüche, mit Mitteln zur Rückstellung (118; 418) der zumindest einen Ausströmer-Klappe in eine Schließposition.

17. Ausströmer mit
- zumindest einer steuerbaren Ausströmer-Klappe (108, 110; 408, 410, 462, 464) mit zumindest einem ersten Formgedächtniselement (120; 420) zur Ausübung einer Zug- oder Druckkraft auf einen Verstellmechanismus (112, 114, 116; 416), um einen Öffnungswinkel der Ausströmer-Klappe einzustellen, wobei ein erstes Ende des ersten Formgedächtniselements mit dem Verstellmechanismus, der zumindest einen Ausströmer-Klappe und ein zweites Ende des ersten Formgedächtniselements mit einer ersten Seite einer Wippe (122; 422) verbunden ist,
- einem zweiten Formgedächtniselement (124; 424), das mit einer zweiten Seite der Wippe verbunden ist, wobei die zumindest eine Ausströmer-Klappe durch Auslösung des Formgedächtniseffekts des ersten Formgedächtniselements in einen ersten Öffnungswinkel gebracht wird und durch Auslösung des Formgedächtniseffekts des zweiten Formgedächtniselements in einen zweiten Öffnungswinkel gebracht wird, wobei der erste Öffnungswinkel einen Klimatisierungs-Betriebsmodus und der zweite Öffnungswinkel einem Defroster-Betriebsmodus entspricht.

18. Ausströmer nach Anspruch 17 mit Mitteln zur Induzierung eines Formgedächtniseffekts durch Beaufschlagung des Formgedächtniselements mit einem elektrischen Strom, einer Strahlung, einer Ultraschallwelle oder einem anderen Energieeintrag.

19. Ausströmer nach Anspruch 17 oder 18, wobei das zumindest eine Formgedächtniselement als Formgedächtnisdraht ausgebildet ist.

20. Ausströmer nach Anspruch 17, 18 oder 19, wobei die Zug- oder Druckkraft durch eine Längenänderung des zumindest einen Formgedächtniselements durch Auslösung des Formgedächtniseffekts ausgeübt wird.

21. Ausströmer nach einem der vorhergehenden Ansprüche 17 bis 20, mit zumindest einer zweiten Ausströmer-Klappe, die von der Windschutzscheibenwurzel aus betrachtet hinter der Ausströmer-Klappe anzuordnen ist, und die zur Öffnung nur in dem Klimatisierungs-Betriebsmodus ausgebildet ist.

22. Steuerungsgerät zur Beaufschlagung eines ersten Formgedächtniselements (120; 420) mit einem ersten elektrischen Strom und zur Beaufschlagung eines zweiten Formgedächtniselements (124; 424) mit einem zweiten elektrischen Strom,
- wobei die ersten und zweiten Formgedächtniselemente zum Antrieb zumindest einer Ausströmer-Klappe (108, 110; 408, 410) mit einer Verstellvorrichtung für die zumindest eine Ausströmer-Klappe mechanisch gekoppelt sind,
- wobei ein erstes Ende des ersten Formgedächtniselements mit dem Verstellmechanismus, der zumindest einen Ausströmer-Klappe und ein zweites Ende des ersten Formgedächtniselements mit einer ersten Seite einer Wippe (122; 422) verbunden ist,
- einem zweiten Formgedächtniselement (124; 424), das mit einer zweiten Seite der Wippe verbunden ist,
wobei das Steuerungsgerät so ausgebildet ist, dass
- durch die Beaufschlagung des ersten Formgedächtniselements mit dem ersten elektrischen Strom die zumindest eine Ausströmer-Klappe durch Auslösung des Formgedächtniseffekts in einen ersten Öffnungswinkel gebracht wird und
- durch die Beaufschlagung des zweiten Formgedächtniselements mit dem zweiten elektrischen Strom die zumindest eine Ausströmer-Klappe durch Auslösung des Formgedächtniseffekts in einen zweiten Öffnungswinkel gebracht wird,
wobei der erste Öffnungswinkel einen Klimatisierungs-Betriebsmodus und der zweite Öffnungswinkel einem Defroster-Betriebsmodus entspricht.

23. Steuerungsgerät nach Anspruch 22, mit Pulsweitenmodulationsmitteln (148) zur Einstellung des ersten und des zweiten elektrischen Stroms, sodass die zumindest eine Ausströmer-Klappe auf einen entsprechenden ersten bzw. zweiten Öffnungswinkel eingestellt wird.

24. Instrumententafel für ein Kraftfahrzeug mit einem Ausströmer nach einem der vorhergehenden Ansprüche 17 bis 21.

25. Instrumententafel nach Anspruch 24, wobei der Ausströmer nahe einer Windschutzscheibenwurzel (102) angeordnet ist.

## Claims

1. Device for a motor vehicle, with
- at least one outflow vent flap (108, 110; 408, 410),
- control means (112, 114, 116, 118, 120, 122, 124, 138, 148; 416, 418, 420, 422, 424) for setting an opening angle of the outflow vent flap as a function of an air-conditioning operating mode or a defroster operating mode, wherein the control means are designed for setting a first opening angle in the air-conditioning operating mode and for setting a second opening angle in the defroster operating mode such that the airflow is directed towards the motor vehicle windscreen (100),
- with a drive (112, 114, 116, 118, 122; 416, 422) for the at least one outflow vent flap, which drive has at least one first shape memory element (120, 420), wherein the first shape memory element (120, 420) is designed for exerting a tensile force or compressive force on an adjustment mechanism (112, 114, 116; 416) in order to set an opening angle of the outflow vent flap, wherein a first end of the first shape memory element is connected to the adjustment mechanism of the at least one outflow vent flap, and a second end of the first shape memory element is connected to a first side of a rocker (122; 422),
- with a second shape memory element (124; 424) which is connected to a second side of the rocker, wherein the at least one outflow vent flap is brought into a first opening angle by triggering of the shape memory effect of the first shape memory element, and is brought into a second opening angle by triggering of the shape memory effect of the second shape memory element, wherein the first opening angle corresponds to an air-conditioning operating mode and the second opening angle corresponds to a defroster operating mode.

2. Device according to Claim 1, wherein the outflow vent flap is arranged on a side of an instrument panel (104) of the motor vehicle that faces the windscreen.

3. Device according to Claim 1 or 2, wherein the outflow vent flap is arranged in the vicinity of a windscreen base (102).

4. Device according to Claim 1, 2 or 3, wherein a respective pair (454, 456) of outflow vent flaps is arranged on the driver's side and on the passenger's side.

5. Device according to one of the preceding claims, with at least one second outflow vent flap (462, 464) which is arranged behind the outflow vent flap, as viewed from a windscreen base, and wherein the control means are designed in such a manner that the second outflow vent flap is open only in the air-conditioning operating mode.

6. Device according to Claim 5, wherein a respective second pair (458, 460) of second outflow vent flaps is arranged on the driver's side and on the passenger's side.

7. Device according to one of the preceding claims, wherein a plurality of outflow vent flaps close and open up a common air duct.

8. Device according to one of the preceding Claims 5, 6 or 7, wherein the first and the second opening angles are selected in such a manner that the airflow in the defroster operating mode is approximately identical to the airflow in the air-conditioning operating mode.

9. Device according to one of the preceding claims, wherein the second opening angle is selected in such a manner that the airflow in the air-conditioning operating mode reaches a head region in the motor vehicle interior.

10. Device according to one of the preceding claims, wherein the first opening angle is between 25 and 45 degrees, preferably between 30 and 40 degrees, in particular approx. 37.5 degrees.

11. Device according to one of the preceding claims, wherein the second opening angle is between 60 and 110 degrees, preferably between 70 and 95 degrees, in particular approx. 80 degrees.

12. Device according to one of the preceding claims, wherein the second opening angle is approximately twice the first opening angle.

13. Device according to one of the preceding claims, with an electric switching circuit for controlling the at least one shape memory element.

14. Device according to one of the preceding claims, with at least one second outflow vent flap which is arranged behind the outflow vent flap, as viewed from the windscreen base, and with second driving means for the at least one second outflow vent flap, wherein the second driving means have a shape memory element for setting only the first opening angle.

15. Device according to one of the preceding claims, wherein the control means have pulse width modulation means (148) for controlling the at least one shape memory element.

16. Device according to one of the preceding claims, with means for resetting (118; 418) the at least one outflow vent flap into a closed position.

17. Outflow vent, with
- at least one controllable outflow vent flap (108, 110; 408, 410, 462, 464) with at least one first shape memory element (120, 420) for exerting a tensile or compressive force on an adjustment mechanism (112, 114, 116; 416) in order to set an opening angle of the outflow vent flap, wherein a first end of the first shape memory element is connected to the adjustment mechanism of the at least one outflow vent flap, and a second end of the first shape memory element is connected to a first side of a rocker (122; 422),
- a second shape memory element (124; 424) which is connected to a second side of the rocker, wherein the at least one outflow vent flap is brought into a first opening angle by triggering of the shape memory effect of the first shape memory element, and is brought into a second opening angle by triggering of the shape memory effect of the second shape memory element, wherein the first opening angle corresponds to an air-conditioning operating mode and the second opening angle corresponds to a defroster operating mode.

18. Outflow vent according to Claim 17 with means for inducing a shape memory effect by subjecting the shape memory element to an electric current, radiation, an ultrasound wave or another power application means.

19. Outflow vent according to Claim 17 or 18, wherein the at least one shape memory element is designed as a shape memory wire.

20. Outflow vent according to Claims 17, 18 or 19, wherein the tensile or compressive force is exerted by changing the length of the at least one shape memory element by triggering of the shape memory effect.

21. Outflow vent according to one of the preceding Claims 17 to 20, with at least one second outflow vent flap which is to be arranged behind the outflow vent flap, as viewed from the windscreen base, and which is designed for opening only in the air-conditioning operating mode.

22. Control device for subjecting a first shape memory element (120; 420) to a first electric current and for subjecting a second shape memory element (124; 424) to a second electric current,
- wherein, for the driving of at least one outflow vent flap (108, 110; 408, 410), the first and second shape memory elements are mechanically coupled to an adjustment device for the at least one outflow vent flap,
- wherein a first end of the first shape memory element is connected to the adjustment mechanism of the at least one outflow vent flap, and a second end of the first shape memory element is connected to a first side of a rocker (122; 422),
- and with a second shape memory element (124; 424) which is connected to a second side of the rocker, wherein the control device is designed in such a manner that
- by subjecting the first shape memory element to the first electric current, the at least one outflow vent flap is brought into a first opening angle by triggering of the shape memory effect, and
- by subjecting the second shape memory element to the second electric current, the at least one outflow vent flap is brought into a second opening angle by triggering of the shape memory effect, wherein the first opening angle corresponds to an air-conditioning operating mode and the second opening angle corresponds to a defroster operating mode.

23. Control device according to Claim 22, with pulse width modulation means (148) for setting the first and second electric current such that the at least one outflow vent flap is set to a corresponding first and second opening angle.

24. Instrument panel for a motor vehicle, with an outflow vent according to one of the preceding Claims 17 to 21.

25. Instrument panel according to Claim 24, wherein the outflow vent is arranged in the vicinity of a windscreen base (102).

## Revendications

1. Dispositif pour un véhicule automobile, avec
- au moins un clapet d'écoulement (108, 110; 408, 410),
- des moyens de commande (112, 114, 116, 118, 120, 122, 124, 138, 148; 416, 418, 420, 422, 424) pour le réglage d'un angle d'ouverture du clapet d'écoulement en fonction d'un mode de fonctionnement de climatisation ou de dégivrage, dans lequel les moyens de commande sont conçus pour le réglage d'un premier angle d'ouverture dans le mode de fonctionnement de climatisation et pour le réglage d'un second angle d'ouverture dans le mode de fonctionnement de dégivrage pour le balayage d'un pare-brise (100) du véhicule automobile,
- avec un entraînement (112, 114, 116, 118, 122; 416, 422) pour l'au moins un clapet d'écoulement, qui comprend au moins un premier élément à mémoire de forme (120; 420), dans lequel le premier élément à mémoire de forme (120; 420) est conçu pour exercer une force de traction ou de compression sur un mécanisme de déplacement (112, 114, 116; 416), afin de régler un angle d'ouverture du clapet d'écoulement, dans lequel une première extrémité du premier élément à mémoire de forme est reliée au mécanisme de déplacement de l'au moins un clapet d'écoulement et une seconde extrémité du premier élément à mémoire de forme est reliée à un premier côté d'une bascule (122; 422),
- avec un second élément à mémoire de forme (124; 424), qui est relié à un second côté de la bascule, dans lequel l'au moins un clapet d'écoulement est amené à un premier angle d'ouverture par déclenchement de l'effet de mémoire de forme du premier élément à mémoire de forme et est amené à un second angle d'ouverture par déclenchement de l'effet de mémoire de forme du second élément à mémoire de forme, dans lequel le premier angle d'ouverture correspond à un mode de fonctionnement de climatisation et le second angle d'ouverture correspond à un mode de fonctionnement de dégivrage.

2. Dispositif selon la revendication 1, dans lequel le clapet d'écoulement est disposé sur un côté d'un tableau de bord (104) du véhicule automobile, qui est tourné vers le pare-brise.

3. Dispositif selon la revendication 1 ou 2, dans lequel le clapet d'écoulement est disposé à proximité d'un pied de pare-brise (102).

4. Dispositif selon la revendication 1, 2 ou 3, dans lequel une paire (454, 456) de clapets d'écoulement est disposée respectivement du côté du conducteur et du côté du passager.

5. Dispositif selon l'une quelconque des revendications précédentes, avec au moins un deuxième clapet d'écoulement (462, 464), qui est disposé derrière le clapet d'écoulement par rapport au pied du pare-brise, et dans lequel les moyens de commande sont conçus de telle manière que le deuxième clapet d'écoulement ne soit ouvert que dans le mode de fonctionnement de climatisation.

6. Dispositif selon la revendication 5, dans lequel une deuxième paire (458, 460) de deuxièmes clapets d'écoulement est disposée respectivement du côté du conducteur et du côté du passager.

7. Dispositif selon l'une quelconque des revendications précédentes, dans lequel plusieurs clapet d'écoulement ferment ou ouvrent un canal d'air commun.

8. Dispositif selon l'une quelconque des revendications précédentes 5, 6 ou 7, dans lequel le premier et le second angles d'ouverture sont choisis de telle manière que le flux d'air dans le mode de fonctionnement de dégivrage soit sensiblement égal au flux d'air dans le mode de fonctionnement de climatisation.

9. Dispositif selon l'une quelconque des revendications précédentes, dans lequel le second angle d'ouverture est choisi de telle manière que le flux d'air dans le mode de fonctionnement de climatisation atteigne une zone des têtes dans l'habitacle du véhicule automobile.

10. Dispositif selon l'une quelconque des revendications précédentes, dans lequel le premier angle d'ouverture est compris entre 25 et 45 degrés, de préférence entre 30 et 40 degrés, et vaut en particulier environ 37,5 degrés.

11. Dispositif selon l'une quelconque des revendications précédentes, dans lequel le second angle d'ouverture est compris entre 60 et 110 degrés, de préférence entre 70 et 95 degrés, et vaut en particulier environ 80 degrés.

12. Dispositif selon l'une quelconque des revendications précédentes, dans lequel le second angle d'ouverture vaut environ le double du premier angle d'ouverture.

13. Dispositif selon l'une quelconque des revendications précédentes, avec un circuit de commande électrique pour commander l'au moins un élément à mémoire de forme.

14. Dispositif selon l'une quelconque des revendications précédentes, avec au moins un deuxième clapet d'écoulement, qui est disposé derrière le clapet d'écoulement par rapport au pied du pare-brise, et avec des deuxièmes moyens d'entraînement pour l'au moins un deuxième clapet d'écoulement, dans lequel les deuxièmes moyens d'entraînement comprennent un élément à mémoire de forme pour le réglage du premier angle d'ouverture uniquement.

15. Dispositif selon l'une quelconque des revendications précédentes, dans lequel les moyens d'entraînement comprennent des moyens de modulation en largeur d'impulsions (148) pour la commande de l'au moins un élément à mémoire de forme.

16. Dispositif selon l'une quelconque des revendications précédentes, avec des moyens pour le rappel (118; 418) de l'au moins un clapet d'écoulement dans une position de fermeture.

17. Dispositif d'écoulement, avec
- au moins un clapet d'écoulement commandable (108, 110; 408, 410, 462, 464) avec au moins un premier élément à mémoire de forme (120; 420) pour exercer une force de traction ou de compression sur un mécanisme de déplacement (112, 114, 116; 416), afin de régler un angle d'ouverture du clapet d'écoulement, dans lequel une première extrémité du premier élément à mémoire de forme est reliée au mécanisme de déplacement de l'au moins un clapet d'écoulement et une seconde extrémité du premier élément à mémoire de forme est reliée à un premier côté d'une bascule (122; 422),
- un second élément à mémoire de forme (124; 424), qui est relié à un second côté de la bascule, dans lequel l'au moins un clapet d'écoulement est amené à un premier angle d'ouverture par déclenchement de l'effet de mémoire de forme du premier élément à mémoire de forme et est amené à un second angle d'ouverture par déclenchement de l'effet de mémoire de forme du second élément à mémoire de forme, dans lequel le premier angle d'ouverture correspond à un mode de fonctionnement de climatisation et le second angle d'ouverture correspond à un mode de fonctionnement de dégivrage.

18. Dispositif d'écoulement selon la revendication 17, avec des moyens pour induire un effet de mémoire de forme en appliquant à l'élément à mémoire de forme un courant électrique, un rayonnement, une onde ultrasonore ou un autre apport d'énergie.

19. Dispositif d'écoulement selon la revendication 17 ou 18, dans lequel l'au moins un élément à mémoire de forme est un fil à mémoire de forme.

20. Dispositif d'écoulement selon la revendication 17, 18 ou 19, dans lequel la force de traction ou de compression est exercée par une variation de longueur de l'au moins un élément à mémoire de forme provoquée par le déclenchement de l'effet de mémoire de forme.

21. Dispositif d'écoulement selon l'une quelconque des revendications précédentes 17 à 20, avec au moins un deuxième clapet d'écoulement, qui doit être disposé derrière le clapet d'écoulement par rapport au pied du pare-brise, et qui est conçu pour s'ouvrir uniquement dans le mode de fonctionnement de climatisation.

22. Appareil de commande pour appliquer un premier courant électrique à un premier élément à mémoire de forme (120; 420) et pour appliquer un second courant électrique à un second élément à mémoire de forme (124; 424),
- dans lequel le premier et le second éléments à mémoire de forme sont couplés mécaniquement à un dispositif de déplacement de l'au moins un clapet d'écoulement pour entraîner au moins un clapet d'écoulement (108, 110; 408, 410),
- dans lequel une première extrémité du premier élément à mémoire de forme est reliée au mécanisme de déplacement de l'au moins un clapet d'écoulement et une seconde extrémité du premier élément à mémoire de forme est reliée à un premier côté d'une bascule (122; 422),
- avec un second élément à mémoire de forme (124; 424), qui est relié à un second côté de la bascule, dans lequel l'appareil de commande est conçu de telle manière que
- par l'application du premier courant électrique au premier élément à mémoire de forme, l'au moins un clapet d'écoulement soit amené à un premier angle d'ouverture par déclenchement de l'effet de mémoire de forme, et
- par l'application du second courant électrique au second élément à mémoire de forme, l'au moins un clapet d'écoulement soit amené à un second angle d'ouverture par déclenchement de l'effet de mémoire de forme, dans lequel le premier angle d'ouverture correspond à un mode de fonctionnement de climatisation et le second angle d'ouverture correspond à un mode de fonctionnement de dégivrage.

23. Appareil de commande selon la revendication 22, avec des moyens de modulation en largeur d'impulsions (148) pour le réglage du premier et du second courants électriques, de telle manière que l'au moins un clapet d'écoulement soit réglé à un premier ou un second angle d'ouverture correspondant.

24. Tableau de bord pour un véhicule automobile avec un dispositif d'écoulement selon l'une quelconque des revendications précédentes 17 à 21.

25. Tableau de bord selon la revendication 24, dans lequel le dispositif d'écoulement est disposé à proximité d'un pied de pare-brise (102).
